# EUROPEAN PATENT APPLICATION

(11) **EP 4 494 769 A1**
(43) Date of publication of application: **22.01.2025**
(21) Application number: 23770690.8
(22) Date of filing: 10.03.2023
(51) Int. Cl.: B05C 17/00, C09D 11/16, B43K 8/00, B05B 1/26

(54) **OIL-BASED INK COMPOSITION FOR WRITING UTENSILS**

(30) Priority: 18.03.2022 JP 2022044479
(71) Applicant: Mitsubishi Pencil Company, Limited, Tokyo 140-8537 (JP)
(72) Inventor: IKAI, Takayuki, Tokyo 140-8537 (JP)
(74) Representative: Vossius & Partner Patentanwälte Rechtsanwälte mbB
(86) International application number: PCT/JP2023/009384
(87) International publication number: WO 2023/176735

(57) **Abstract**

An oil-based ink composition for writing utensils according to the present invention contains an aluminum pigment of the non-leafing type, a solvent, and a resin. The surface of the aluminum pigment is an embossed scale-like aluminum pigment of the non-leafing type that expresses interference fringes. The arithmetic mean roughness Ra of a coating film measured under the condition of a measurement range of 2 mm in conformity with JIS B 0601 is 250 Å or more, the coating film being formed by applying the oil-based ink composition for writing utensils to a polystyrene plate to a thickness of 50 µm and drying.

## Description

### FIELD

The present invention relates to an oil-based composition for a writing instrument (writing utensils).

### BACKGROUND

In the prior art, ink compositions that generate reflected light (iridescent effect) that appears in different colors depending on viewing angle, producing a unique appearance due to interference effect of the reflected light, have been proposed for decorative purposes in the field of drawing.

PTL 1 discloses an ink for a writing instrument, containing an interference pigment obtained by coating the surface of a flaky minute base material with a metal oxide having a high refractive index. PTL 1 describes that this writing instrument ink can produce considerably characteristic ink colors in which the color of a written line changes depending on the color shade of the writing surface.

PTL 2 discloses a glittering ink composition containing a hologram pigment and a shear thinning agent.

PTL 3 discloses a multilayer coating film that exhibits interference fringes, consisting of a base coating film and a clear coating film formed thereon, wherein the base coating film is formed from a base coating material containing an emboss-patterned scaly metal pigment that exhibits interference fringes, a binder resin, and a curing agent; the pigment weight concentration (PWC) of the base coating film is 20 to 30%; the dry film thickness of the base coating film is 0.3 to 5 µm; and the scaly metal pigment is arranged as parallel as possible on the substrate surface. PTL 3 discloses that the embossing pattern can be obtained by the method described in PTL 4.

PTL 5 to 7 propose writing instrument inks containing an aluminum pigment and polyvinyl butyral.

In the field of drawing, airbrushes that enable drawing by scattering ink into a mist and spraying the mist onto paper are used. More specifically, various airbrushes that enable drawing by being attached to a writing instrument; spraying air onto the tip of the pen; scattering ink that seeps out onto the tip into a mist; and spraying the mist onto paper have been proposed.

PTL 8 discloses an airbrush unit comprising an airbrush and a writing instrument, which sprays an aqueous ink composition via air ejected from the airbrush, wherein the writing instrument contains the aqueous ink composition, and the aqueous ink composition contains a concealing pigment and has a shear thinning index of 0.4 to 0.8 at a shear rate of 9.6 to 76.6/s.

### [CITATION LIST]

### [PATENT LITERATURE]

[PTL 1] JP 2002-241665
[PTL 2] JP 2003-26985
[PTL 3] JP 2015-116792
[PTL 4] JP 8-502301
[PTL 5] JP 4-126782
[PTL 6] JP 10-316921
[PTL 7] JP 2016-518652
[PTL 8] JP 2019-189671

### SUMMARY

### [TECHNICAL PROBLEM]

In the present invention, a novel oil-based ink composition capable of obtaining a coating film with an iridescent effect is provided.

### [SOLUTION TO PROBLEM]

The present inventors, as a result of intensive studies, have discovered that the above object can be achieved by the following means, and have completed the present invention. Specifically, the present invention is as follows:
<Aspect 1> An oil-based ink composition for a writing instrument
   containing a non-leafing type aluminum pigment, an organic solvent, and a resin, wherein the aluminum pigment is a non-leafing type, emboss-patterned scaly aluminum pigment that exhibits interference fringes, and
   an arithmetic average roughness Ra, measured from a contour curve obtained under a condition of a measurement range of 2 mm in accordance with JIS B 0601, of a coating film formed by applying the oil-based ink composition for a writing instrument at a thickness of 50 µm to a polystyrene plate and drying is 250 Å or more.
<Aspect 2> The oil-based ink composition for a writing instrument according to Aspect 1, wherein a number of peaks obtained under a condition of a maximum height of 1000 Å or more on the contour curve is 150 or greater.
<Aspect 3> The oil-based ink composition for a writing instrument according to Aspect 1 or 2, wherein the resin is polyvinyl butyral.
<Aspect 4> The oil-based ink composition for a writing instrument according to Aspect 3, wherein a mass average molecular weight of the polyvinyl butyral is 30,000 or greater.
<Aspect 5> The oil-based ink composition for a writing instrument according to Aspect 3 or 4, wherein a content ratio of hydroxyl group in the polyvinyl butyral is 26 mol% or less.
<Aspect 6> The oil-based ink composition for a writing instrument according to any one of Aspects 1 to 5, further containing a hydroxy acid ester.
<Aspect 7> A writing instrument filled with the oil-based ink composition for a writing instrument according to any one of Aspects 1 to 6.
<Aspect 8> An airbrush unit, comprising the writing instrument according to Aspect 7 and an airbrush,
   capable of scattering the oil-based ink composition for a writing instrument in the writing instrument via air ejected from the airbrush.

### [ADVANTAGEOUS EFFECTS OF INVENTION]

According to the present invention, a novel oil-based ink composition capable of obtaining a coating film with an iridescent effect can be provided.

### BRIEF DESCRIPTION OF DRAWINGS

FIG. 1 is a sideways cross-sectional diagram of a coating film obtained with the oil-based ink composition for a writing instrument of the present invention.
FIG. 2 is a sideways cross-sectional diagram of a coating film obtained with a conventional oil-based ink composition for a writing instrument.
FIG. 3 is a schematic diagram of an airbrush unit combined with a marking pen.

### DESCRIPTION OF EMBODIMENTS

### <<Oil-based ink composition for writing instrument>>

The oil-based ink composition for a writing instrument of the present invention
contains an aluminum pigment, a solvent, and a resin, wherein
the aluminum pigment is a non-leafing type, emboss-patterned scaly aluminum pigment that exhibits interference fringes, and
an arithmetic average roughness Ra, measured under a condition of a measurement range of 2 mm in accordance with JIS B 0601, of a coating film formed by applying the oil-based ink composition for a writing instrument at a thickness of 50 µm to a polystyrene plate and drying is 300 Å or more.

The present inventors have discovered that an excellent iridescent effect appears when a coating film according to the above characteristics is formed.

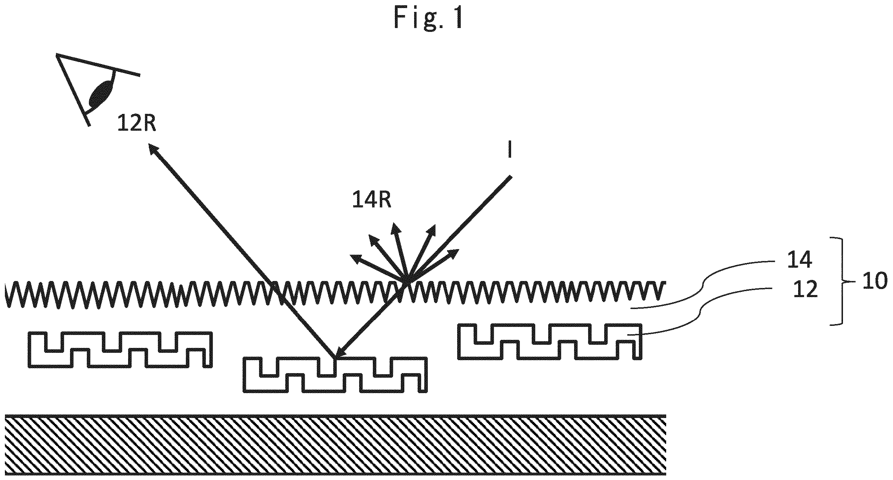

Specifically, when the surface of the coating film has a predetermined roughness as shown in FIG. 1, a portion of incident light I that reaches the coating film 10 is diffusely reflected as reflected light 14R on the surface of the coating film 10 composed of a resin 14 and having the above average roughness. The remaining portion of incident light I passes through the surface of the coating film 10 and is specularly reflected as reflected light 12R on the surface of the emboss-patterned scaly aluminum pigment 12. As a result, overlapping of these reflected lights is suppressed, and is considered why an iridescent effect of the aluminum pigment 12 is clearly perceived.

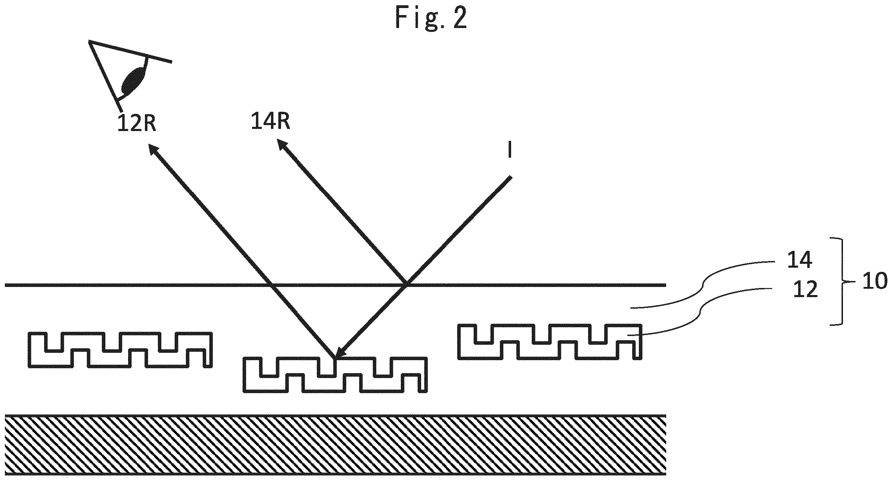

When the surface of the coating film does not have a predetermined roughness as shown in FIG. 2, a portion of incident light I that reaches the coating film 10 is specularly reflected as reflected light 14R on the surface of the coating film 10 composed of a resin 14 and not having the above average roughness. The remaining portion of incident light I passes through the surface of the coating film 10 and is specularly reflected as reflected light 12R on the surface of the emboss-patterned scaly aluminum pigment 12. As a result, these reflected lights overlap, and is thus considered why an iridescent effect of the aluminum pigment 12 cannot be clearly perceived.

The arithmetic average roughness Ra of the coating film can be measured from a contour curve obtained under the following conditions, using a stylus surface profiler (Dektak 6M by ULVAC, Inc.).
Stylus size (stylus radius): 12.5 µm
Measurement range (length): 2 mm
Measurement time (duration): 12 s
Resolution: 0.556 µm/sample
Load (force): 4 mg

The arithmetic average roughness may be 250 Å or more, 300 Å or more, 350 Å or more, 400 Å or more, 450 Å or more, 500 Å or more, 550 Å or more, or 600 Å or more, and may be 10,000 Å or less, 5,000 Å or less, 4,000 Å or less, 3,000 Å or less, 2,000 Å or less, or 1,000 Å or less.

The oil-based ink composition for a writing instrument of the present invention can have fine irregularities on the surface. Specifically, the number of peaks on the above contour curve can be 150/cm or greater, 200/cm or greater, 250/cm or greater, 300/cm or greater, 350/cm or greater, 400/cm or greater, 450/cm or greater, 500/cm or greater, 550/cm or greater, 580/cm or greater, 600/cm or greater, 620/cm or greater, or 650/cm or greater. Such a number of peaks facilitates a fine diffuse reflection of the reflected light 14R, and can thereby contribute to an iridescent effect of the above aluminum pigment 12.

The number of peaks is a number obtained by analyzing an obtained contour curve with the above stylus surface profiler under the condition of a maximum height of 1000 Å or more.

The number of peaks is not particularly limited, and for example, can be 10000/cm or less, 8000/cm or less, 6000/cm or less, 5000/cm or less, 4000/cm or less, 3000/cm or less, 2000/cm or less, 1000/cm or less, 900/cm or less, 850/cm or less, 820/cm or less, 800/cm or less, 780/cm or less, 750/cm or less, 720/cm or less, or 700/cm or less.

It is preferable that the oil-based ink composition for a writing instrument of the present invention further contain a hydroxy acid ester, from the viewpoint of suppressing whitening of the obtained coating film. In this case, it is preferable that an auxiliary solvent be further contained, from the viewpoint of further suppressing whitening.

The oil-based ink composition for a writing instrument of the present invention may contain other optional components.

Hereinafter, each component of the present invention will be described.

### <Aluminum pigment>

The aluminum pigment used in the present invention is a non-leafing type, emboss-patterned scaly aluminum pigment that exhibits interference fringes. Generally, aluminum pigments can be manufactured by pulverizing and grinding aluminum in a ball mill or an attritor mill in the presence of a pulverizing liquid medium and a pulverizing aid.

The aluminum pigment used in the present invention is a non-leafing type (including resincoated type) aluminum pigment uniformly dispersed and aligned within the ink film. In terms of the present invention, a "leafing type" pigment means a type of pigment that has been surfacetreated with a surfactant such as stearic acid, and floats on a coating film surface by surface tension and aligns in parallel. In contrast, a "non-leafing type" pigment means a type of pigment that is dispersed within a coating film, not on a coating film surface, and aligns in parallel.

The embossing pattern of the aluminum pigment used in the present invention may be implemented at the time of manufacturing, or may be implemented after manufacturing. The embossing pattern can be applied by the method described in PTL 4.

The aluminum pigment may be a non-vapor-deposited aluminum pigment, or may be a vapor-deposited aluminum pigment. It is preferable that a vapor-deposited aluminum pigment be used, from the viewpoint of generating a satisfactory iridescent effect. A "vapor-deposited aluminum pigment" is generally an aluminum pigment having a thickness of 100 nm or less that can be obtained by vapor-depositing aluminum onto a plastic film, peeling the vapor-deposited aluminum from the plastic film, and pulverizing the aluminum thin film. The thickness of the vapor-deposited aluminum pigment may be 80 nm or less, 50 nm or less, 30 nm or less, 20 nm or less, or 10 nm or less. Particularly, aluminum may be vapor-deposited onto an emboss-patterned plastic film to impart an emboss pattern to an aluminum pigment.

Vapor-deposited aluminum pigments commercially available for oil-based inks can be used, for example, METALURE A4010 AE commercially available from Eckart GmbH can be used. The vapor-deposited aluminum pigment can be used independently or in a mixture of two or more.

Non-vapor-deposited aluminum pigments commercially available for oil-based inks can be used, for example, FD-4070 and FW-610 commercially available from Asahi Kasei Chemicals and 2172 and 1200M commercially available from Toyo Aluminum K.K. can be used. The non-vapor-deposited aluminum pigments can be used independently or in a mixture of two or more.

The aluminum pigment commercially available for oil-based inks can be used in a form of being dispersed in a solvent. The solvent may be the above organic solvent, or may be a solvent generally used in coating materials, for example, a mineral spirit, toluene, xylene, or Solvent Naphtha.

The content ratio of solid content of the aluminum pigment in the oil-based ink of the present invention is preferably 0.1% by mass or greater, 0.2% by mass or greater, 0.3% by mass or greater, 0.5% by mass or greater, 1% by mass or greater, or 3% by mass or greater, from the viewpoint of generating a satisfactory metallic gloss, and is preferably 25% by mass or less, 20% by mass or less, 15% by mass or less, 10% by mass or less, 7% by mass or less, 5% by mass or less, 3% by mass or less, 1% by mass or less, or 0.5% by mass or less, from the viewpoint of suppressing clogging of the oil-based ink within an ink flow part of a writing instrument.

### <Organic solvent>

As organic solvents, for example, aromatics, alcohols, polyhydric alcohols, glycol ethers, hydrocarbons, and esters can be used. These solvents may be used independently, or may be used in combination.

As aromatics, for example, benzyl alcohol, ethylene glycol monophenyl ether, ethylene glycol monobenzyl ether, propylene glycol monophenyl ether, diethylene glycol monophenyl ether, alkylsulfonic phenyl ester, butyl phthalate, ethylhexyl phthalate, tridecyl phthalate, ethylhexyl trimellitate, diethylene glycol dibenzoate, and dipropylene glycol dibenzoate can be used.

As alcohols, for example, ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methyl amyl alcohol, 2-ethyl butanol, n-heptanol, 2-heptanol, 3-heptanol, n-octanol, 2-octanol, 2-ethylhexanol, 3,5,5-trimethylhexanol, nonanol, n-decanol, undecanol, trimethylnonyl alcohol, tetradecanol, heptadecanol, cyclohexanol, and 2-methylcyclohexanol can be used.

As polyhydric alcohols, for example, ethylene glycol, diethylene glycol, 3-methyl-1,3 butanediol, triethylene glycol, dipropylene glycol, 1,3 propanediol, 1,3 butanediol, 1,5 pentanediol, hexylene glycol, and octylene glycol can be used.

As glycol ethers, for example, methyl isopropyl ether, ethyl ether, ethyl propyl ether, ethyl butyl ether, isopropyl ether, butyl ether, hexyl ether, 2-ethylhexyl ether, ethylene glycol monohexyl ether, ethylene glycol mono-2-ethylbutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methyl-3-methoxy-1-butanol, 3-methoxy-1-butanol, propylene glycol monomethyl ether, propylene glycol monoethyl ether, propylene glycol monopropyl ether, propylene glycol monobutyl ether, propylene glycol tertiary butyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, and tetrapropylene glycol monobutyl ether can be used.

As hydrocarbons, for example, linear chain hydrocarbons such as hexane, isohexane, heptane, octane, nonane, and decane; and cyclic hydrocarbons such as cyclohexane, methylcyclohexane, and ethylcyclohexane can be used.

As esters, for example, propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, methyl isobutyrate, ethyl isobutyrate, propyl isobutyrate, methyl valerate, ethyl valerate, propyl valerate, methyl isovalerate, ethyl isovalerate, propyl isovalerate, methyl trimethylacetate, ethyl trimethylacetate, propyl trimethylacetate, methyl caproate, ethyl caproate, propyl caproate, methyl caprylate, ethyl caprylate, propyl caprylate, methyl laurate, ethyl laurate, methyl oleate, ethyl oleate, caprylic triglyceride, tributyl acetate citrate, octyl oxystearate, propylene glycol monoricinoleate, methyl 2-hydroxyisobutyrate, and 3-methoxybutyl acetate can be used.

Among these organic solvents, it is preferable that 50% by mass or greater of the organic solvent in the ink composition comprise ethyl alcohol and/or propylene glycol monomethyl ether, for reasons such as drying speed of handwriting, adhesion to writing surface, ink ejectability when used in combination with an airbrush, uniformity of application surface, and safety. Further, benzyl alcohol and/or ethylene glycol monophenyl ether may be used in combination for the purpose of adjusting drying speed of handwriting.

### <Resin>

Any resin that imparts the above surface roughness when a coating film is formed can be used as the resin. For example, sulfonamide resins, maleic resins, terpene resins, terpene phenolic resins, ester gum, xylene resins, alkyd resins, phenolic resins, rosin, polyvinyl pyrrolidone, polyvinyl acetal, polyvinyl alcohol, acrylic resins, melamine-based resins, nitrocellulose-based resins, urea resins, and derivatives thereof can be used. The above surface roughness can be increased by increasing the molecular weight of the resin used and/or using an organic solvent in which the resin has low solubility for at least a portion of the organic solvent.

Among the resins, it is preferable that nitrocellulose-based resins, polyvinyl acetal, and particularly, polyvinyl butyral be used, from the viewpoint of suppressing whitening of the coating film while obtaining predetermined irregularities.

The content ratio of the resin in the oil-based ink of the present invention is preferably 1% by mass or greater, 2% by mass or greater, 3% by mass or greater, or 5% by mass or greater, from the viewpoint of obtaining sufficient adherence, and is preferably 50% by mass or less, 45% by mass or less, 40% by mass or less, 35% by mass or less, 30% by mass or less, 25% by mass or less, 20% by mass or less, 15% by mass or less, 10% by mass or less, or 7% by mass or less, from the viewpoint of suppressing an excessive increase in ink viscosity, and as a result, not impairing writability or ejectability from the airbrush.

### <Resin: polyvinyl butyral>

Polyvinyl butyral is a (co)polymer produced by reacting polyvinyl alcohol with butyraldehyde. Specifically, the resin is a copolymer represented by the following formula.

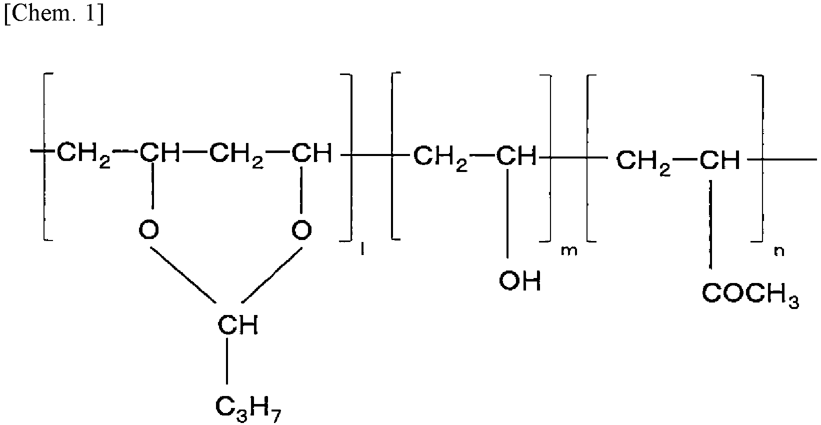

The mass average molecular weight of polyvinyl butyral is preferably 10,000 or greater, 20,000 or greater, 30,000 or greater, or 35,000 or greater, from the viewpoint of obtaining the above arithmetic average roughness. Among these ranges, 30,000 or greater is particularly preferable. The mass average molecular weight is preferably 150,000 or less, 140,000 or less, 130,000 or less, 120,000 or less, 110,000 or less, 100,000 or less, 90,000 or less, 80,000 or less, 70,000 or less, or 60,000 or less, from the viewpoint of balancing viscosity and adherence as an oil-based ink composition.

The mass average molecular weight is a standard polystyrene conversion value based on measurement values obtained by gel permeation chromatography (GPC) using tetrahydrofuran (THF) as a solvent.

The content ratio of hydroxyl group in polyvinyl butyral may be 30 mol% or less, 29 mol% or less, 28 mol% or less, 27 mol% or less, or 26 mol% or less, and is particularly preferably 26 mol% or less, from the viewpoint of enhancing abrasion resistance of the obtained coating film. The degree of acetalization may be 20 mol% or greater or 22 mol% or greater.

The above content ratio of hydroxyl group is a value determined by dividing the amount of ethylene groups bonded to hydroxyl groups by the total amount of ethylene groups in the main chain, expressed in molar fraction as a percentage (mol%). The degree of acetalization is a value determined by dividing the amount of ethylene groups bonded to acetal groups by the total amount of ethylene groups in the main chain, expressed in molar fraction as a percentage (mol%).

The amount of ethylene groups bonded to hydroxyl groups, for example, can be determined by measuring the amount of ethylene groups bonded to the hydroxyl groups of the above polyvinyl acetal resin, by a method in accordance with JIS K6728 "Testing Methods for Polyvinyl Butyral".

### <Hydroxy acid ester>

As hydroxy acid esters, for example, hydroxy acid esters having a boiling point of 150°C or higher and 190°C or lower, 180°C or lower, 170°C or lower, or 160°C or lower can be used. Hydroxy acid esters have a boiling point higher than water and thus volatilize more slowly than water, allowing any remaining water to be removed from the ink. Whitening of the coating film when the oil-based ink composition for a writing instrument of the present invention is applied in a high-humidity environment can thereby be suppressed.

As hydroxy acid esters, for example, glycolic acid esters, lactic acid esters, tartronic acid esters, glyceric acid esters, and hydroxybutyric acid esters can be used. Among these, lactic acid esters are preferably used from the viewpoint of suppressing whitening.

As lactic acid esters, for example, ethyl lactate (boiling point of 154°C), propyl lactate (boiling point of 169°C), butyl lactate (boiling point of 170°C), pentyl lactate (boiling point of 226°C), and hexyl lactate (boiling point of 245°C) can be used. Among these, ethyl lactate is preferably used from the viewpoint of suppressing whitening.

The content ratio of the hydroxy acid ester is preferably 0.1% by mass or greater, 0.2% by mass or greater, 0.3% by mass or greater, 0.5% by mass or greater, 0.7% by mass or greater, 1% by mass or greater, 3% by mass or greater, or 4% by mass or greater, from the viewpoint of suppressing whitening. The content ratio may be 25% by mass or less, 20% by mass or less, 15% by mass or less, 10% by mass or less, 7% by mass or less, or 5% by mass or less.

### <Auxiliary solvent>

As optional auxiliary solvents, solvents capable of dissolving the above resin and having a boiling point higher than the above hydroxy acid ester can be used. The phrase "capable of dissolving resin" means that the dissolution amount of a resin, for example, is 5 g or more, 10 g or more, 15 g or more, 20 g or more, 30 g or more, 40 g or more, 50 g or more, 70 g or more, 80 g or more, or 100 g or more relative to 100 ml of the auxiliary solvent.

Such auxiliary solvents are generally used as drying retardants. The presence of an auxiliary solvent can suppress whitening of the coating film.

As such solvents, for example, 3-methoxy-1-butanol (boiling point of 158°C), 3-methoxy-3-methyl-1-butanol (boiling point of 174°C), benzyl alcohol (boiling point of 205°C), phenyl propylene glycol (boiling point of 243°C), diethylene glycol monophenyl ether (boiling point of 245°C), 2-phenoxyethanol (boiling point of 247°C), and benzyl glycol (boiling point of 256°C) can be used. These solvents may be commercially available ones.

The content ratio of the auxiliary solvent in the oil-based ink of the present invention is preferably 0.1% by mass or greater, 0.2% by mass or greater, 0.3% by mass or greater, 0.5% by mass or greater, 0.7% by mass or greater, 1% by mass or greater, 3% by mass or greater, or 4% by mass or greater, from the viewpoint of suppressing whitening. The content ratio may be 25% by mass or less, 20% by mass or less, 15% by mass or less, 10% by mass or less, 7% by mass or less, 6% by mass or less, or 5% by mass or less.

The difference in boiling point between the auxiliary solvent and the hydroxy acid ester may be 10°C or higher, 20°C or higher, 30°C or higher, 40°C or higher, or 50°C or higher, and may be 150°C or lower, 130°C or lower, 110°C or lower, 100°C or lower, 90°C or lower, 80°C or lower, 70°C or lower, or 60°C or lower.

### <Other components>

Examples of other components include dispersants, leveling agents, rust inhibitors, preservatives, lubricants, and surface modifiers. As leveling agents, for example, fluorine-based surfactants, silicone oils, and phosphoric acid ester-based surfactants can be used. As surface modifiers, silicone-based surface modifiers can be used.

### <<Writing instrument>>

The writing instrument contains the above oil-based ink composition for a writing instrument. The writing instrument may comprise an ink reservoir, a writing part, and a retention part. In this case, the oil-based ink may be stored in the ink reservoir.

The writing instrument may be a marking pen. A "marking pen" in the present specification means a pen having a mechanism of supplying an ink stored in an ink reservoir to a writing part made of resin by capillary action, and includes pens referred to by a person skilled in the art as "felt-tip pens".

Particularly, it is preferable that the writing instrument of the present invention be a valve-type marking pen further comprising a valve between the ink reservoir and the writing part, from the viewpoint of satisfactory ink outflow properties.

### <<Airbrush unit>>

The airbrush unit of the present invention comprises the above writing instrument and an airbrush, and
is capable of scattering the oil-based ink composition in the writing instrument via air ejected from the airbrush.

An airbrush unit 100 comprising the writing instrument attached to the airbrush may comprise an optional coupling member 130 to couple a writing instrument 120 to an airbrush 110.

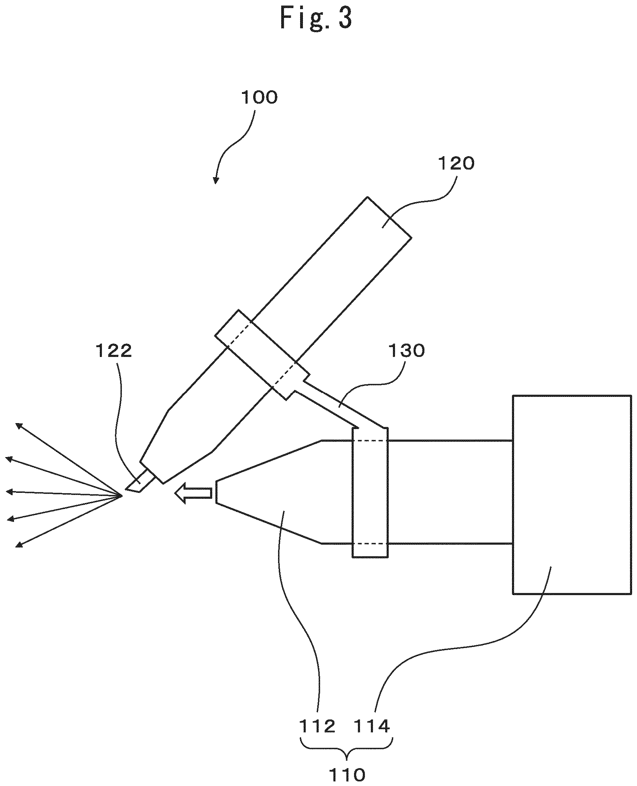

The airbrush unit 100 can spray air from a nozzle 112 in a direction toward a writing part 122 of the writing instrument 120, for example, as indicated by the white void arrow in FIG. 1, so as to spread and scatter the ink adhering to the writing part 122 from the writing part 122, as indicated by the five arrows in FIG. 3.

### <Airbrush>

As shown in FIG. 1, the airbrush 110 may comprise the nozzle 112 and a gas-supplying member 114. The nozzle 112 and the gas-supplying member 114 may be integrally formed, or may be connected to each other via a hollow member such as a hose.

The nozzle is not particularly limited as long as the nozzle can spray a high-pressure gas at the writing part of the writing instrument.

The gas-supplying member is not particularly limited as long as the member can supply a high-pressure gas to the nozzle. The gas-supplying member may be a member in which a human blows air from the mouth to spray; a member in which an elastic portion of a blower pump is compressed and deformed by hand to generate a high-pressure gas; a member in which a piston of a pump is reciprocably operated by hand, wherein the pump consists of the piston and a cylinder; a member using a spray can filled with liquefied gas; or a member that electrically generates compressed air, for example, a member comprising a motor and a high-pressure gas generating apparatus, such as a diaphragm connected to the motor via a mechanism that converts rotational motion into reciprocating motion, that delivers a high-pressure gas from the high-pressure air generating apparatus to the nozzle.

### <Coupling member>

The coupling member is an optional member for coupling the airbrush and the writing instrument. The coupling member is not particularly limited as long as the airbrush and the writing instrument are physically coupled.

### EXAMPLES

The present invention will be specifically described by the Examples and Comparative Examples. However, the present invention is not limited thereto.

### <<Preparation of ink composition>>

### <Example 1>

The following materials were mixed to prepare 100 parts by mass of the oil-based ink of Example 1:
Emboss-patterned, non-leafing type vapor-deposited aluminum pigment (Metalure Prismatic H-50720 AE, average particle size of 20 µm): 5 parts by mass
Nitrocellulose: 4.2 parts by mass
Tocopherol acetate (Riken E Acetate 960, Riken Vitamin Co., Ltd.): 0.5 parts by mass
Silicone-based surface modifier (BYK-SICLEAN 3720, BYK): 3.0 parts by mass
Propylene glycol monomethyl ether: 70.2 parts by mass
Ethanol: 10 parts by mass
Isopropyl alcohol: 1.5 parts by mass
Benzyl alcohol: 5.0 parts by mass

### <Examples 2 to 11 and Comparative Examples 1 and 2>

Except that the types and content ratios of the components were changed as indicated in Table 1, the oil-based ink compositions of Examples 2 to 11 and Comparative Examples 1 and 2 were prepared in the total parts by mass indicated in Table 1, in the same manner as in Example 1.

Details of other components mentioned in Table 1 are as follows:
Ketone resin A: Ketone Resin K90, Arakawa Chemical Industries, Ltd.
Ketone resin B: Laropal A81, BASF
Polyvinyl butyral (PVB) resin A: S-LEC BL-10, Sekisui Chemical Co., Ltd., mass average molecular weight of 15000, about 28 mol% of hydroxyl group
PVB resin B: S-LEC BL-S, Sekisui Chemical Co., Ltd., mass average molecular weight of 23,000, about 23 mol% of hydroxyl group
PVB resin C: S-LEC BM-1, Sekisui Chemical Co., Ltd., mass average molecular weight of 40,000, about 34 mol% of hydroxyl group
PVB resin D: S-LEC BM-5, Sekisui Chemical Co., Ltd., mass average molecular weight of 55,000, about 34 mol% of hydroxyl group
PVB resin E: S-LEC BM-S, Sekisui Chemical Co., Ltd., mass average molecular weight of 55,000, about 23 mol% of hydroxyl group
PVB resin F: S-LEC BL-SHZ, Sekisui Chemical Co., Ltd., mass average molecular weight of 58,000, about 23 mol% of hydroxyl group

### <<Evaluation>>

The ink reservoir of a valve-type marking pen (PC-3M, Mitsubishi Pencil Co., Ltd.) was filled with the prepared oil-based ink composition of Example 1. Writing was carried out on a polystyrene plastic plate in an environment of a temperature of 25°C and a humidity of 70% using the marking pen.

### <Iridescent effect>

The iridescent effect of the obtained coating film was visually observed. The evaluation criteria were as follows:
A: Vivid iridescent effect could be confirmed.
B: Although somewhat faded, iridescent effect could be confirmed.
C: Iridescent effect could not be confirmed.

### <Whitening>

The iridescent effect of the obtained coating film was visually observed. The evaluation criteria were as follows:
A: Whitening of coating film could not be observed.
B: Whitening of coating film could be faintly observed.
C: Whitening of coating film could be observed.

### <Abrasion resistance>

The obtained coating film was abraded with the tip of a cotton swab by applying a load of 100 g thereto and reciprocating 25 times to evaluate the abrasion resistance of the coating film.

The evaluation criteria were as follows:
A: Coating film did not peel.
B: Coating film peeled, but appearance was not adversely affected.
C: Coating film peeled to the extent that appearance was adversely affected.

### <Arithmetic average roughness and number of peaks>

For the arithmetic average roughness of the coating film, the arithmetic average roughness of each of the coating films obtained with the oil-based ink compositions of Examples 2, 4, and 8 and Comparative Examples 1 and 2 was measured from a contour curve obtained under the following conditions, using a stylus surface profiler (Dektak 6M, ULVAC, Inc.):
Stylus size (stylus radius): 12.5 µm
Measurement range (length): 2 mm
Measurement time (duration): 12 s
Resolution: 0.556 µm/sample
Load (force): 4 mg

The number of peaks obtained under the condition of a maximum height of 1000 Å or more on the above contour curve was calculated.

Table 1 shows the configurations and evaluation results of the Examples and Comparative Examples. In the addition amount of each component, a blank space indicates that the component was not contained.

### [Table 1]

**Table 1**

| | | | Example 1 | Example 2 | Example 3 | Comparative Example 1 | Comparative Example 2 | Example 4 | Example 5 | Example 6 | Example 7 | Example 8 | Example 9 | Example 10 | Example 11 |
|---|---|---|---|---|---|---|---|---|---|---|---|---|---|---|---|
| Addition amount of each component (parts by mass) | Aluminum pigment | Non-leafing/Evaporation | 5.0 | 5.0 | 5.0 | 5.0 | 5.0 | 5.0 | 5.0 | 5.0 | 5.0 | 5.0 | 5.0 | 5.0 | 5.0 |
| | Resin | Nitrocellulose | 4.2 | 4.2 | | | | | | | | | | | |
| | | Ketone resin A | | | 4.2 | 25.0 | | | | | | | | | |
| | | Ketone resin B | | | | | 15.0 | | | | | | | | |
| | | PVB resin A (molecular weight 15000) | | | | | | 4.8 | | | | | | | |
| | | PVB resin B (molecular weight 23000) | | | | | | | 4.4 | | | | | | |
| | | PVB resin C (molecular weight 40000) | | | | | | | | 2.8 | | | | | |
| | | PVB resin D (molecular weight 56000) | | | | | | | | | 1.7 | | | | |
| | | PVB resin E (molecular weight 55000) | | | | | | | | | | 2.4 | | 2.4 | |
| | | PVB resin F (molecular weight 58000) | | | | | | | | | | | 2.4 | | 2.4 |
| | Tocopherol acetate | | 0.5 | 0.5 | 0.5 | 0.5 | 0.5 | 0.5 | 0.5 | 0.5 | 0.5 | 0.5 | 0.5 | 0.5 | 0.5 |
| | Ethyl lactate | | | 3.0 | 5.0 | 3.0 | 3.0 | 3.0 | 3.0 | 3.0 | 3.0 | 3.0 | 3.0 | 3.0 | 3.0 |
| | Surface modifier | | 3.0 | 3.0 | 3.0 | 3.0 | 3.0 | 3.0 | 3.0 | 3.0 | 3.0 | 3.0 | 3.0 | | |
| | Organic solvent | PGM | 70.8 | 67.8 | 65.8 | 48.5 | 58.5 | 49.5 | 51.5 | 59.5 | 65.0 | 61.5 | 61.5 | 64.5 | 64.5 |
| | | Ethanol | 10.0 | 10.0 | 10.0 | 10.0 | | 10.0 | 10.0. | 10.0 | 10.0 | 10.0 | 10.0 | 10.0 | 10.0 |
| | | Isopropyl alcohol | 1.5 | 1.5 | 1.5 | | | | | | | | | | |
| | | Benzyl alcohol | 5.0 | 5.0 | 5.0 | 5.0 | 5.0 | 5.0 | 5.0 | 5.0 | 5.0 | 5.0 | 5.0 | 5.0 | 5.0 |
| Total | | | 100.0 | 100.0 | 100.0 | 100.0 | 100.0 | 80.8 | 82.4 | 88.8 | 93.2 | 90.4 | 90.4 | 90.4 | 90.4 |
| Evaluation results | Iridescent effect | | A | A | A | C | C | B | B | A | A | A | A | A | A |
| | Application in high-humidity environment whitening | | C | B | B | A | A | A | A | A | A | A | A | A | A |
| | Abrasion resistance | | A | A | A | A | A | A | A | C | C | B | B | A | A |
| | Arithmetic average roughness (Å) | | | 429 | | 87 | 172 | 522 | | | | 642 | | | |
| | Number of peaks (/cm) | | | 287 | | 0 | 99 | 371 | | | | 382 | | | |

From the results of Examples 2, 4, and 8 and Comparative Examples 1 and 2, it can be understood that an iridescent effect was obtained in the coating film obtained with the oil-based ink compositions of the Examples in which the average roughness was 300 Å or more. For other Examples, average roughness was not evaluated. However, since the iridescent effect substantially the same as those of Examples 2, 4, and 8 was obtained, it can be assumed that the other Examples have substantially the same average roughness.

### REFERENCE SIGNS LIST

10 coating film obtained with the oil-based ink composition for a writing instrument of the present invention
12 aluminum pigment
14 resin
I incident light
12R reflected light by aluminum pigment
14R reflected light by resin
100 airbrush unit
110 airbrush
112 nozzle
114 gas-supplying member
120 writing instrument
122 writing part
130 coupling member

## Claims

1. An oil-based ink composition for a writing instrument
containing a non-leafing type aluminum pigment, an organic solvent, and a resin, wherein
the aluminum pigment is a non-leafing type, emboss-patterned scaly aluminum pigment that exhibits interference fringes, and
an arithmetic average roughness Ra, measured from a contour curve obtained under a condition of a measurement range of 2 mm in accordance with JIS B 0601, of a coating film formed by applying the oil-based ink composition for a writing instrument at a thickness of 50 µm to a polystyrene plate and drying is 250 Å or more.

2. The oil-based ink composition for a writing instrument according to claim 1, wherein a number of peaks obtained under a condition of a maximum height of 1000 Å or more on the contour curve is 150 or greater.

3. The oil-based ink composition for a writing instrument according to claim 1 or 2, wherein the resin is polyvinyl butyral.

4. The oil-based ink composition for a writing instrument according to claim 3, wherein a mass average molecular weight of the polyvinyl butyral is 30,000 or greater.

5. The oil-based ink composition for a writing instrument according to claim 3 or 4, wherein a content ratio of hydroxyl group in the polyvinyl butyral is 26 mol% or less.

6. The oil-based ink composition for a writing instrument according to any one of claims 1 to 5, further containing a hydroxy acid ester.

7. A writing instrument filled with the oil-based ink composition for a writing instrument according to any one of claims 1 to 6.

8. An airbrush unit, comprising the writing instrument according to claim 7 and an airbrush,
capable of scattering the oil-based ink composition for a writing instrument in the writing instrument via air ejected from the airbrush.
